# EUROPEAN PATENT APPLICATION

(11) **EP 3 785 990 A1**
(43) Date of publication of application: **03.03.2021**
(21) Application number: 20190470.3
(22) Date of filing: 28.04.2008
(51) Int. Cl.: B60Q 1/04, B60Q 1/12, F21V 5/04, F21S 41/663, F21S 41/27

(54) **LED HEADLAMP WITH CORNER ILLUMINATION**

(30) Priority: 09.05.2007 US 928373 P
(62) Divisional of application: 08748194.1
(71) Applicant: Magna International Inc., Aurora, ON L4G 7K1 (CA)
(72) Inventor: MCFADDEN, James R., Oxford, MI 48371 (US); WOODWARD, Ronald O., Yorktown, VA 23696 (US)
(74) Representative: Glawe, Delfs, Moll

(57) **Abstract**

A headlamp (20) is provided which employs semiconductor light sources, such as light emitting diodes, and which includes light sources which can selectively be illuminated to provide steerable light beam patterns, to illuminate areas adjacent the optical axis of the headlamp, and corner light elements (48) which can be illuminated to illuminate the area (corresponding to light beam pattern 114) adjacent the steerable light beam patterns (102-110) further from the optical axis of the headlamp. The corner light elements (48) can be illuminated after the steerable light beam patterns (102-110) have been provided or can be illuminated independently of the steerable light patterns, for example responsive to the activation of a turn signal.

## Description

### FIELD OF THE INVENTION

The present invention relates to an LED headlamp. More specifically, the present invention relates to an LED headlamp with corner illumination to illuminate the area adjacent the front of the vehicle in which the headlamp is installed when the vehicle is turning into that adjacent area.

### BACKGROUND OF THE INVENTION

LED headlamps are being developed for automobiles and other vehicles by a variety of manufacturers. The assignee of the present invention has developed several innovative LED headlamps and headlamp components and has pending or published patent applications for these innovations. For example, published U.S. Patent application 20060239024 to Valcamp et al., the contents of which are incorporated herein by reference, describes an LED headlamp with high and low beam patterns and which can also include additional LEDs which can be selectively illuminated to provide steerable light to illuminate areas up to fifteen degrees to the right or left of the line of travel of the vehicle through which the vehicle will travel as it is turned.

While LEDs headlamps with such steerable light do provide numerous advantages, they also can suffer from some disadvantages. In particular, the limit for the steerable lighting of fifteen degrees from the line of travel of the vehicle is less than might be desired in many circumstances.

### SUMMARY OF THE INVENTION

It is an object of the present invention to provide a novel LED headlamp with corner illumination which obviates or mitigates at least one disadvantage of the prior art.

According to a first aspect of the present invention, there is provided a headlamp employing semiconductor light sources to create desired beam patterns, comprising: a projector assembly comprising a light engine including a plurality of semiconductor light sources and a lens, the plurality of semiconductor light sources including at least one semiconductor light source which is selectively illuminated to provide a steerable light beam pattern and semiconductor light sources to create a desired beam pattern in the direction of the optical axis of the headlamp; at least two fill light elements including semiconductor light sources, the fill light elements being illuminated to provide fill light for desired headlamp beam patterns; and at least one corner light element, the at least one corner light element being illuminated to produce a corner light beam pattern at an angle with respect to the optical axis of the headlamp.

The present invention provides a headlamp which employs semiconductor light sources, such as light emitting diodes, and which includes light sources which can selectively be illuminated to provide steerable light beam patterns, to illuminate areas adjacent the optical axis of the headlamp, and corner light elements which can be illuminated to illuminate the area adjacent the steerable light beam patterns further from the optical axis of the headlamp. The corner light elements can be illuminated after the steerable light beam patterns have been provided or can be illuminated independently of the steerable light patterns, for example responsive to the activation of a turn signal.

### BRIEF DESCRIPTION OF THE DRAWINGS

Preferred embodiments of the present invention will now be described, by way of example only, with reference to the attached Figures, wherein:
Figure 1 shows a perspective view of the front, top and side of the light sources of a headlamp in accordance with the present invention;
Figure 2 shows another perspective view of the front, top and side of the light sources of the headlamp of Figure 1 wherein the lens of the projector has been removed; and
Figure 3 shows a schematic representation of the steerable light beam patterns and corner light beam patterns produced by the headlamp of Figure 1.

### DETAILED DESCRIPTION OF THE INVENTION

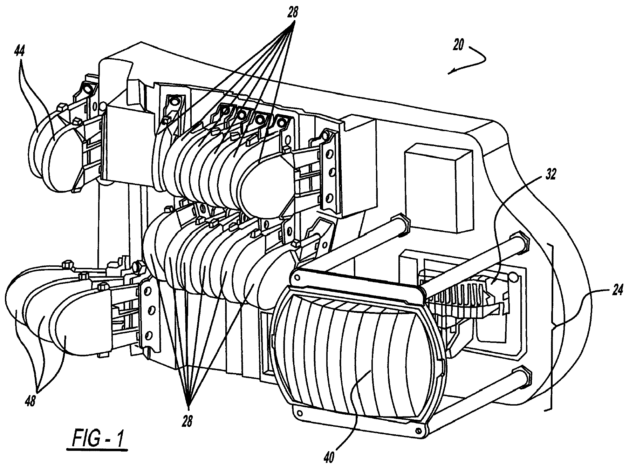

A headlamp fixture in accordance with the present invention is indicated generally at 20 in Figure 1. Headlamp 20 includes a projector assembly 24, which provides focused areas of greater illumination to form "hotspots" in desired headlamp beam patterns, and a series of fill light assemblies 28, referred to herein a D-Elements, which provide the necessary fill light in desired headlamp beam patterns. The projector assembly 24 and D-Elements 28 can be similar to those of U.S. Patent Application No. 11/393,023 and PCT Patent Application No. PCT/US2006/045766 to the assignee of the present invention, and the contents of these applications are incorporated herein by reference.

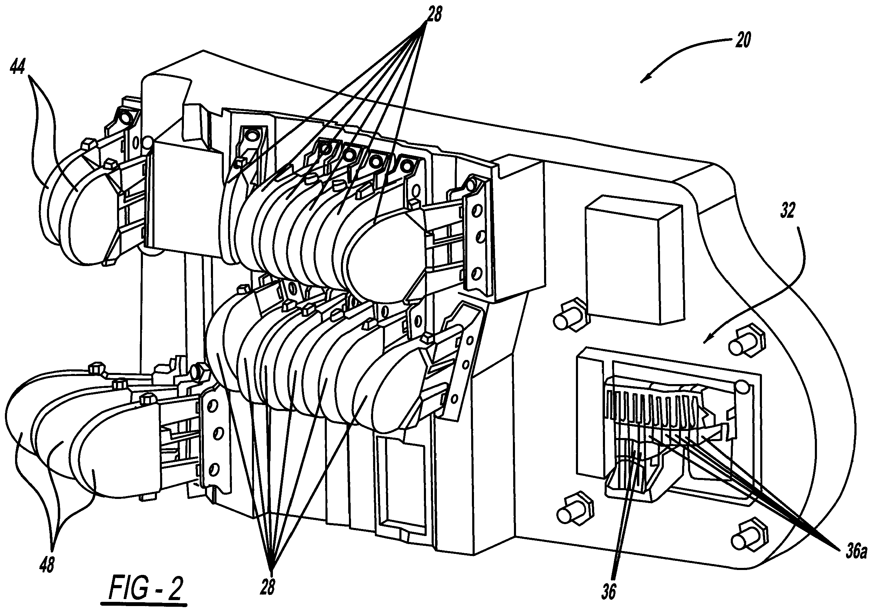

Projector assembly 24 comprises a light engine 32, best seen in Figure 2, which includes several semiconductor light sources, such as light emitting diodes (LEDs), which emit light that is transferred, via light pipes 36, to a projector lens 40 that directs the light to contribute to the desired headlamp patterns. Light engine 32 can also include semiconductor light sources and light pipes 36a which can be selectively turned on or off to provide steerable light. These additional semiconductor light sources are turned on or off, according to an appropriate control algorithm, to provided light at an angle of up to fifteen degrees to the left (for the illustrated left hand headlamp 20) or fifteen degrees to the right, for a right hand headlamp 20 (not shown) of the optical axis of headlamp 20, which typically corresponds to the direction the vehicle is traveling in.

More detail of a light engine 32 which is suitable for use in headlamp 20 is disclosed in U.S. Patent Application No. 11/787,303 and the contents of this application are incorporated herein by reference.

In addition to projector assembly 24 and fill light D-Elements 28, headlamp 20 can include additional light sources, such as D-Elements 44 or any other suitable light source, as a turn signal indicator.

As described above, it is known to provide sources of steerable light, such as light pipes 36a and their respective LED light sources, which are selectively activated by a suitable control algorithm when the driver of a vehicle turns the steering wheel of the vehicle. This steerable light is intended to illuminate the area adjacent the vehicle, which the vehicle will travel through as the turn is completed, in contrast with the principal elements of the headlamp which illuminate the area directly in front of the vehicle on the optical axis of the headlamp.

However, in existing headlamp systems, due to styling, size and optical pathway considerations, steerable light is typically limited to illuminating an area no more than about fifteen degrees off the optical axis of the headlamp. In many circumstances, fifteen degrees is less than might otherwise be desired.

Accordingly, headlamp 20 includes at least one, and preferably three or more, corner light sources 48. Corner light sources 48 include at least one LED which produces light, a lens to focus the light into a desired corner beam pattern and a light transfer device, such as a light pipe which receives light from the LED and transfers it to the focal point of the lens.

In the illustrated and presently preferred embodiment, corner light sources 48 are D-Elements which are similar to fill light D-Elements 28. The D-shaped body of these D-Elements include an integrally formed light pipe and lens.

In a present embodiment of headlamp 20, corner light sources 48 provide steerable light over an area of from about fifteen degrees to about eighty degrees from the optical axis of headlamp 20. To achieve this desired corner light beam pattern, the D-Elements of corner light sources 48 are thinner than those of fill light 28 to provide for a horizontally wider output light pattern.

Thus, headlamp 20 can provide illumination over an area extending from the optical axis of the headlamp and up to eighty degrees to the left, or right, of the optical axis of the headlamp as the vehicle is turned in the corresponding direction.

In a present embodiment of the invention, it is preferred that corner light sources 48 be illuminated or extinguished as a set, rather than sequentially as was the case with the steerable light from light pipes 36a. Thus, the presently preferred method of operating headlamp 20 is to illuminate corner light sources 48, as the vehicle is turned past the point where all of the steerable light sources have been illuminated.

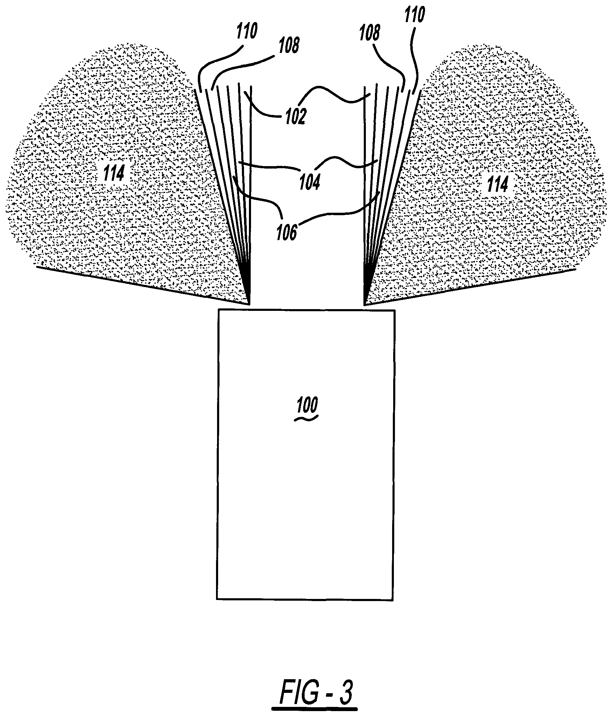

In Figure 3, a vehicle 100 is equipped with headlamps 20 in accordance with the present invention. As the vehicle is turned, to the left or right, steerable light sources in light engine 24 of the corresponding right or left headlamp 20 are illuminated to, in turn, add steerable light beam patterns 102, 104, 106, 108 and 110 to the headlamp beam pattern. As the turn rate of vehicle 100 is increased and/or depending upon other parameters such as the vehicle speed, roll angle, etc., more of steerable beam patterns 102 through 110 are illuminated.

In the illustrated embodiment, beam pattern 102 of the right hand headlamp 20 adds steerable light between the heading direction of the vehicle and about three degrees to the right of the direction vehicle 100 is pointing in, beam pattern 104 adds steerable light from about three degrees to about six degrees from the right of the direction vehicle 100 is pointing in, beam pattern 106 adds steerable light from about six degrees to about nine degrees from the right of the direction vehicle 100 is pointing in, and so on respectively, with beam pattern 110 adding steerable light from about twelve degrees to about fifteen degrees from the right of the direction vehicle 100 is pointing in.

Once the vehicle turn rate is sufficient that steerable light beam pattern 110 is illuminated, any further increase in the turn rate of vehicle 100 results in corner light sources 48 being illuminated to produce corner light beam pattern 114. In a present embodiment of the invention, corner light beam pattern 114 extends from about fifteen degrees from the heading of vehicle 100 to about eighty degrees from the heading of the vehicle.

The present invention is not limited to the use of any particular control algorithm for controlling the steerable light sources or corner light sources 48. For example, the illumination or extinguishing of the steerable light sources and/or corner light sources 48 can be controlled by an algorithm responsive to the turn angle of the vehicle, a combination of the turn angle and vehicle operating speed, etc. Further, the present invention is not limited to headlamp 20 having any particular number of steerable light sources, nor to such sources having a beam width of five degrees and it is contemplated that headlamp 20 can include more steerable light sources with narrower beam patterns or fewer steerable light sources with wider light patterns, etc. It is contemplated that corner light beam pattern 114 can extend over larger areas than fifteen to eighty degrees from the direction of travel of the vehicle or smaller areas but it is preferred that corner light beam pattern 114 overlap with the adjacent steerable light beam pattern to provide a visually continuous illumination pattern for the driver of vehicle 100.

In addition to illuminating corner light sources 48 as vehicle 100 is turned, it is further contemplated that corner light sources 48 can be illuminated whenever the corresponding turn signal of vehicle 100 is activated. For example, if the right hand turn signal of vehicle 100 is activated by the driver to signal the intention to make a right hand turn, corner light sources 48 can be illuminated to produce corner light beam pattern 114 even if vehicle 100 if stopped and/or it's steering wheel has not been turned. In this manner, the driver of vehicle 100 can be provided with an illuminated field of view before he commences a turn. It is further contemplated that this can provide an additional indication, to other drivers on a multilane highway or the like, of the intention of vehicle 100 to execute a lane change or turn.

Further, while the steerable light sources in headlamp 20 are not illuminated in daytime driving conditions, when light engine 24 and fill light sources 28 are deactivated, it is contemplated that corner light sources 48 may still be illuminated, responsive to activation of the turn signal of vehicle 100, to indicate the intentions of the driver of vehicle 100 to other drivers as an added safety feature.

The present invention provides a headlamp which employs semiconductor light sources, such as light emitting diodes, and which includes light sources which can selectively be illuminated to provide steerable light beam patterns, to illuminate areas adjacent the optical axis of the headlamp, and corner light elements which can be illuminated to illuminate the area adjacent the steerable light beam patterns further from the optical axis of the headlamp. The corner light elements can be illuminated after the steerable light beam patterns have been provided or can be illuminated independently of the steerable light patterns, for example responsive to the activation of a turn signal.

The above-described embodiments of the invention are intended to be examples of the present invention and alterations and modifications may be effected thereto, by those of skill in the art, without departing from the scope of the invention which is defined solely by the claims appended hereto.

Some aspects of the invention are recited in the following numbered list of aspects.
1. A headlamp employing semiconductor light sources to create desired beam patterns, comprising:
   a projector assembly comprising a light engine including a plurality of semiconductor light sources and a lens, the plurality of semiconductor light sources including at least one semiconductor light source which is selectively illuminated to provide a steerable light beam pattern and semiconductor light sources to create a desired beam pattern in the direction of the optical axis of the headlamp;
   at least two fill light elements including semiconductor light sources, the fill light elements being illuminated to provide fill light for desired headlamp beam patterns; and
   at least one corner light element, the at least one corner light element being illuminated to produce a corner light beam pattern at an angle with respect to the optical axis of the headlamp.
2. The headlamp of aspect 1 wherein the semiconductor light sources are light emitting diodes.
3. The headlamp of aspect 1 wherein the projector assembly includes at least five selectively illuminated semiconductor light sources to provide steerable light beam patterns from between zero degrees to about fifteen degrees from the optical axis of the headlamp.
4. The headlamp of aspect 3 including at least three corner light elements.
5. The headlamp of aspect 4 wherein the corner light beam pattern produced by the corner light elements extends from about the adjacent steerable light beam pattern to about eighty degrees from the optical axis of the headlamp.
6. The headlamp of aspect 1 wherein the fill light elements are D-elements.
7. The headlamp of aspect 1 wherein the at least one the corner light element includes at least one LED which produces light, a lens to focus the light into a desired corner beam pattern and a light transfer device which receives light from the LED and transfers it to the focal point of the lens.
8. The headlamp of aspect 7 wherein the at least one corner light element is a D-element.

## Claims

1. A headlamp (20) employing semiconductor light sources to create desired beam patterns, including:
a plurality of semiconductor light sources which are selectively illuminated to provide steerable light beam patterns to illuminate areas adjacent the optical axis of the headlamp (20); and
corner light elements (48) which are illuminated to illuminate the area adjacent the steerable light beam patterns further from the optical axis of the headlamp (20).

2. The headlamp (20) of claim 1, wherein the corner light elements (48) are illuminated after the steerable light beam patterns have been provided or are illuminated independently of the steerable light beam patterns.

3. The headlamp (20) of claim 1 or 2, further comprising at least two fill light elements (28) including semiconductor light sources, the fill light elements (28) being illuminated to provide light for the desired beam patterns

4. A headlamp (20) employing semiconductor light sources to create desired beam patterns, comprising:
a projector assembly (24) comprising a light engine (32) including a plurality of semiconductor light sources and a lens (40), the plurality of semiconductor light sources including at least one semiconductor light source which is selectively illuminated to provide a steerable light beam pattern and semiconductor light sources to create a desired beam pattern in the direction of the optical axis of the headlamp;
at least two fill light elements (28) including semiconductor light sources, the fill light elements (28) being illuminated to provide light for the desired beam patterns; and
at least one corner light element (48), the at least one corner light element (48) being illuminated to produce a corner light beam pattern (114) at an angle with respect to the optical axis of the headlamp (20).

5. The headlamp (20) of any one of claims 1 to 4, wherein the semiconductor light sources are light emitting diodes.

6. The headlamp (20) of any one of claims 1 to 5, wherein the projector assembly (24) includes at least five selectively illuminated semiconductor light sources to provide steerable light beam patterns (102, 104, 106, 108, 110) from between zero degrees to about fifteen degrees from the optical axis of the headlamp (20).

7. The headlamp (20) of claim 6, including at least three corner light elements (48).

8. The headlamp (20) of any one of claims 1 to 7, wherein the corner light beam pattern (114) produced by the corner light elements (48) extends from about the adjacent steerable light beam pattern to about eighty degrees from the optical axis of the headlamp (20), the corner light beam pattern particularly overlapping with the adjacent steerable light beam pattern to provide a visually continuous illumination pattern.

9. The headlamp (20) of any one of claims 3 to 8, wherein the fill light elements (28) are D-elements.

10. The headlamp (20) of any one of claims 1 to 9, wherein the at least one the corner light element (48) includes at least one LED which produces light, a lens (40) to focus the light into a desired corner beam pattern and a light transfer device which receives light from the LED and transfers it to the focal point of the lens (40).

11. The headlamp (20) of claim 10, wherein the at least one corner light element (48) includes an optical body configured to receive light from the semiconductor light sources, the optical body formed by two opposing side surfaces and a peripheral surface coupling edges of the two side surface to each other, the two opposing side surfaces having a general D-shape profile with a light receiving area formed by a portion of the peripheral surface along flat side of the D-shape profile and a light output area formed by a portion of the peripheral surface adjacent to curved side of the D-shape profile.

12. The headlamp (20) of claim 1, wherein the at least one corner light element (48) is illuminated in response of a turn signal indicative of a driver's intent to turn the vehicle.

13. The headlamp (20) of any one of claims 1 to 12, wherein the illumination or extinguishing of the steerable light beam patterns and/or corner light elements (48) is controlled by an algorithm responsive to a turn angle of the vehicle, or a combination of the turn angle and a vehicle operating speed.

14. The headlamp (20) of any one of claims 1 to 13, wherein the corner light elements (48) can be illuminated independently of the steerable light beam patterns.
